Europäisches Patentamt

European Patent Office

Office européen des brevets

(11) Publication number: **0 106 572**
**B1**

(12) **EUROPEAN PATENT SPECIFICATION**

(45) Date of publication of patent specification: **04.03.87**

(51) Int. Cl.⁴: **G 06 F 9/44**, G 06 F 9/46

(21) Application number: **83305608.8**

(22) Date of filing: **21.09.83**

(54) Data processing system with virtual machines.

(30) Priority: **30.09.82 JP 172105/82**

(43) Date of publication of application:
**25.04.84 Bulletin 84/17**

(45) Publication of the grant of the patent:
**04.03.87 Bulletin 87/10**

(84) Designated Contracting States:
**DE FR GB**

(56) References cited:
**EP-A-0 024 434**
**EP-A-0 098 172**
**COMPCON '81 - DIGEST OF PAPERS, 23rd-26th
February 1981, pages 229-234, IEEE, New York,
USA. S. TAKAHASI et al.: "An "In-Line" virtual
machine facility"**
**IBM TECHNICAL DISCLOSURE BULLETIN, vol.
21, no. 2, July 1978, pages 456-457, New York,
USA. R. E. BIRNEY: "Program-assigned
hardwired supervisor call instructions"**
**IBM TECHNICAL DISCLOSURE BULLETIN, vol.
25, no. 2, July 1982, pages 650-652, New York,
USA. H. CHILINSKI et al.: "Microprogram
support for change or erroneous hardware-
controlled computer functions (escape
functions)"**

(73) Proprietor: **FUJITSU LIMITED**
**1015, Kamikodanaka Nakahara-ku
Kawasaki-shi Kanagawa 211 (JP)**

(72) Inventor: **Sato, Kiyosumi
Gurin Copo B-511 1496-1, Mukaigaoka Miyamae-
ku
Kawasaki-shi Kanagawa 213 (JP)**
Inventor: **Mizushima, Yoshihiro
Shinjo Koporasu 111 390-16 Shinsaku
Takatsu-ku Kawasaki-shi Kanagawa 213 (JP)**
Inventor: **Ohnishi, Katsumi
2-137, Shimoshingashi
Kawagoe-shi Saitama 356 (JP)**
Inventor: **Kato, Motokazu
1-5-10-42, Sobudai Danchi
Sagamihara-shi Kanagawa 228 (JP)**
Inventor: **Matsumoto, Toshio
Gurin Haitsu 6,900-5 Mukaigaoka Miyamae-ku
Kawasaki-shi Kanagawa 213 (JP)**

(74) Representative: **George, Sidney Arthur et al
GILL JENNINGS & EVERY 53-64 Chancery Lane
London WC2A 1HN (GB)**

## Description

This invention relates to a data processing system with virtual machines. More particularly, it relates to the determination of assist of a load/store control instruction for control registers by hardware in the system.

A data processing system including a virtual machine is disclosed in EP—A—0 024 434. A further virtual machine system is disclosed in EP—A—0 098 172, the publication date of which is such that the document falls within Article 54(3)EPC as regards the present application.

Large-scale computer systems frequently utilise the concept of virtual machines. Such systems are provided with a plurality of operating systems for controlling the virtual machines and with a supervisory operating system, i.e. a control program. The control program runs under an actual machine, while the operating systems run under the control program.

Such a system may, for example, be provided with $16(=2^4)$ control registers, if a 4-bit word is defined in an instruction for selecting the control registers. Not all of the sixteen control registers, however, are initially defined, and only the initially defined control registers may be mounted in the hardware of the system. As a result, when a new function is added, it is necessary to change the hardware to require additional control registers.

Various proposals have been made to allow additional control registers to be defined in a main memory storage without adding hardware. However, such additional control registers cannot be accessed directly by the operating systems. Therefore, when any one of the operating systems generates a control register operating instruction, such as a load instruction or a store instruction, an interruption is generated in the control program and control is transferred from the operating systems to the control program. In other words, such a control register operating instruction is simulated by the control program. This, however, increases the overhead time of the system.

It is an object of the present invention to provide a data processing system with virtual machines in which the overhead time is reduced.

According to the present invention there is provided a data processing system having at least two virtual machines, and comprising first and second operating systems for controlling the virtual machines; a supervisory operating system for controlling the first and second operating systems; and a plurality of control registers; characterised by an extended control register having a control register controlling bit; means for accessing the control registers in response to a control register operating instruction, generated from the first operating system, when the control register controlling bit has a first value; and means for generating an interruption in the supervisory operating system in response to a control register operating instruction generated from the second operating system, when the control register controlling bit has a second value different from the first value.

As a result of this configuration, the assist of a control register operating instruction by hardware is performed upon only some operating systems. This reduces the entire overhead time.

An embodiment of the present invention will now be described, by way of example, with reference to the accompanying drawings, wherein

Fig. 1 is a block diagram of a data processing system according to the present invention;

Fig. 2 is a block diagram of a control storage access control circuit in the present invention; and

Fig. 3 is a flow chart illustrating the operation of the circuit of Fig. 2.

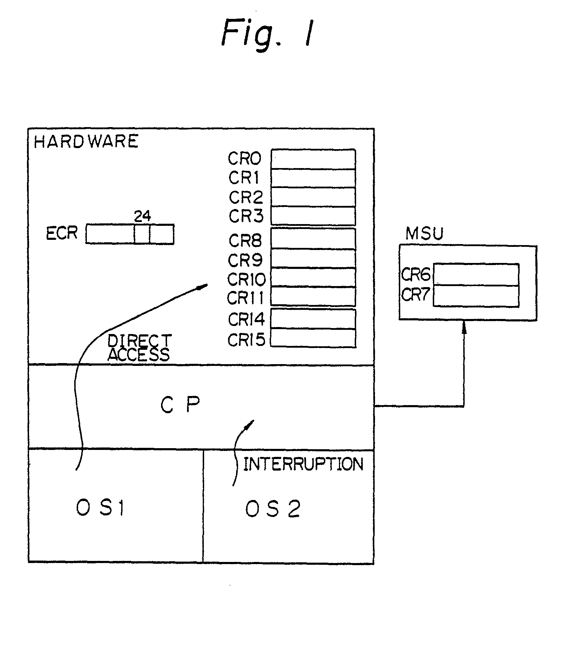

Referring to Fig. 1, a data processing system includes control registers CR0, CR1, CR2, CR3, CR8, CR9, CR10, CR11, CR14 and CR15 provided in hardware. As explained above, in a large machine, since a 4-bit word for selecting the control registers is defined in the instruction, $16(=2^4)$ control register can be provided. In this case, control registers CR4, CR5, CR6, CR7, CR12, and CR13 are not mounted in the hardware.

Note that, in the above-mentioned control registers, there are stored a mask bit for an external interruption, a mask bit for a machine check interruption, dynamic address translation (DAT) control information, a dual address space (DAS) control information, program event recording (PER) control information, virtual machine (VM) assist control information, and the like.

Reference ECR deignates an extended control register controlled by a control program CP. The control program CP, called a hypervisor, supervises operating systems OS1 and OS2. Assumed that the operating system OS1 uses the control registers CR0, CR1, CR2, CR3, CR8, CR9, CR10, CR11, CR14, and CR15, while the operating system OS2 uses also control registers CR6 and CR7 in addition to the above-mentioned control registers. In this case, the additional control registers CR6 and CR7 are provided in a main storage unit MSU.

When the operating system OS1 runs, the control program CP makes the bit 24 of the extended control register ECR the value "0". When the operating system OS2 runs, the control program CP makes the bit 24 of the extended control register ECR the value "1".

In the present invention, when the operating system OS1 generates a load control (LCTL) instruction or a store control (STCTL) instruction, these instructions are directly carried out. On the contrary, when the operating system OS2 generates such an instruction, an interruption is generated in the control program CP, which then, in turn, carries out the instruction.

Note that, in the prior art, even when the operating system OS1 generates an instruction, an interruption is generated in the control program CP and the instruction is carried out by the control program CP.

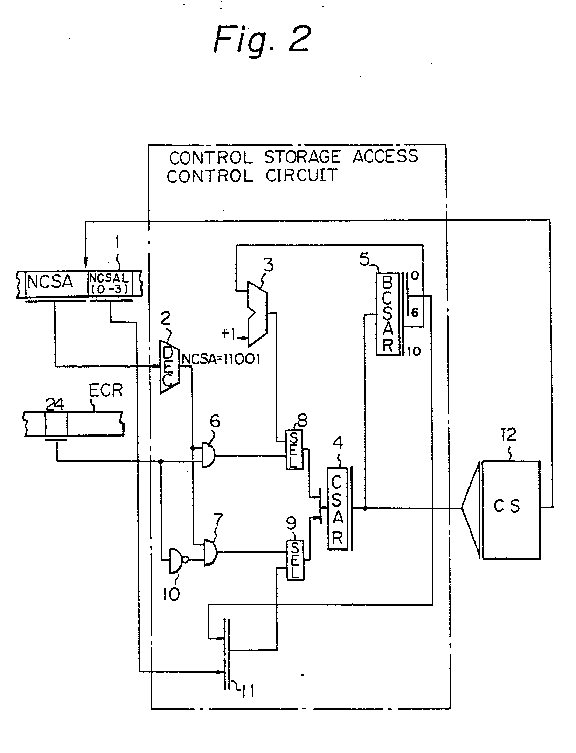

In Fig. 2, which illustrates control storage access control circuit according to the present invention, reference numeral 1 designates a microinstruction register, 2 a decoder, 3 an adder, 4 a control storage address register, 5 a basic control storage address register, 6 and 7 AND circuits, 8 and 9 select circuits, 10 a NOT circuit, 11 a bus, and 12 a control storage. NCSA is an abbreviation for "next control storage address control", and NCSAL is an abbreviation for "next control storage address low."

When a microinstruction corresponding to an LCTL or STCTL instruction is stored in the microinstruction register 1, the content of NCSA is "11001." In this case, the decoder 2 generates the logic "1". In addition, when the bit 24 of the extended control register ECR is at logic "1", the AND circuit 6 generates a logic "1" and the AND circuit 7 generates a logic "0". In this case, the output of the adder 3 is set in the control storage address register 4 through the select circuit 8. Note that the adder 3 adds +1 to the content of the basic control storage address register 5. Therefore, the next address of the control storage 12 is

$$BCSAR+1$$

where BCSAR is the content of the basic control storage address register 5. In this address location of the control storage 12, a microinstruction for an interruption is stored. Thus, an interruption is generated in the control storage 12, so that the LCTL or STCTL instruction is simulated by the control program CP stored in the control storage 12.

On the other hand, when the bit 24 of the extended control register ECR is at logic "0" and the AND circuit 6 generates the logic "0" and the AND circuit 7 generates a logic "1". In this case, the bits 0 through 6 of the basic control storage address register 5 and the bits 0 through 4 of NCSAL are set in the control storage address register 4 through the bus 11 and the select circuit 9. In this case, in the address location indicated by the control storage address register 4, a microinstruction for loading the content of the main storage unit (not shown) into one of the control registers or a microinstruction for storing the content of one of the control registers into the main storage unit is stored. Thus, the LCTL or STCTL instruction is directly carried out.

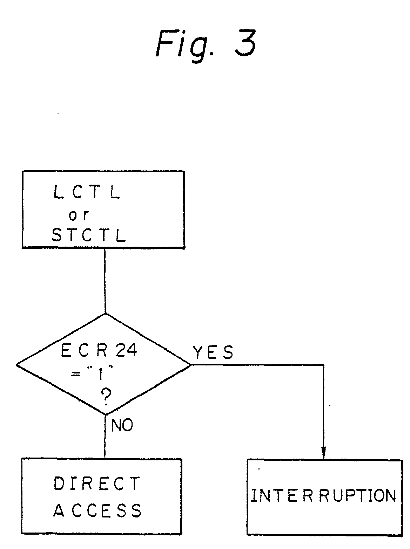

In Fig. 3, which illustrates briefly the operation of the circuit of Fig. 2, an LCTL or STCTL instruction results in a question as to whether the bit 24 of the extended control register ECR is at logic "1". If the answer is affirmative, +1 is added to the content of the basic control storage address register 5. The result serves as the next control storage address in which a microinstruction for initiating an interruption is stored. Contrary to this, if the above-mentioned answer is negative, the bits 0 through 6 of the basic control storage address register 5 and the bits 0 through 3 of NCSAL serve as the next control storage address in which a load or store microinstruction is stored.

## Claims

1. A data processing system having at least two virtual machines, and comprising first and second operating systems (OS1, OS2) for controlling the virtual machines; a supervisory operating system (CP) for controlling the first and second operating systems; and a plurality of control register (CR0, CR1, - - -); characterised by an extended control register (ECR) having a control register controlling bit; means for accessing the control registers in response to a control register operating instruction (LCTC or STCTC), generated from the first operating system, when the control register controlling bit has a first value; and means for generating an interruption in the supervisory operating system in response to a control register operating instruction generated from the second operating system, when the control register controlling bit has a second value different from the first value.

2. A system as claimed in claim 1, characterised in that the first operating system (OS1) can access the control registers; and in that the supervisory operating system (CP) writes said first value in the control register controlling bit of the extended control register (ECR) when the first operating system runs.

3. A system as claimed in claim 1 or claim 2, characterised in that the second operating system (OS2) can access additional control registers (CR6, CR7) other than said control registers (CR0, CR1, - - -); and in that the supervisory operating system (CP) writes said second value in the control register controlling bit of the extended control register (ECR) when the second operating system runs.

### Patentansprüche

1. Datenverarbeitungssystem mit wenigstens zwei virtuellen Maschinen und mit ersten und zweiten Betriebssystemen (OS1, OS2) zur Steuerung der virtuellen Maschinen; einem Überwachungsbetriebssystem (CP) zur Steuerung des ersten und des zweiten Betriebssystems; und einer Vielzahl von Steuerregistern (CR0, CR1, - - -); gekennzeichnet durch ein erweitertes Steuerregister (ECR), welches ein Steuerregistersteuerbit hat; Einrichtungen zum Zugriff zu den Steuerregistern in Abhängigkeit von einer Steuerregisterbetriebsanweisung (LCTC oder STCTC), die von dem ersten Betriebssystem erzeugt wird, wenn das Steuerregistersteuerbit einen ersten Wert hat; und Einrichtungen zur Erzeugung einer Unterbrechung in dem Überwachungsbetriebssystem in Abhängigkeit von einer Steuerregisterbetriebsanweisung, die von dem zweiten Betriebssystem erzeugt wird, wenn das Steuerregistersteuerbit einen Zweiten Wert hat, der von dem ersten Wert verschieden ist.

2. System nach Anspruch 1, dadurch gekennzeichnet, daß das erste Betriebssystem (OS1) zu den Steuerregistern zugreifen kann; und daß das Überwachungsbetriebssystem (CP) den ersten Wert in das Steuerregistersteuerbit des erweiterten Steuerregisters (ECR) schreibt, wenn das erste Betriebssystem läuft.

3. System nach Anspruch 1 oder 2, dadurch gekennzeichnet, daß das zweite Betriebssystem (OS2) zu den zusätzlichen Steuerregistern (CR6, CR7), die andere als die genannten Steuerregister (CR0, CR1, - - -) sind, zugreifen kann; und daß das Überwachungsbetriebssystem (CP) den genannten zweiten Wert in das Steuerregistersteuerbit des erweiterten Steuerregisters (ECR) schreibt, wenn das zweite Betriebssystem läuft.

**Revendications**

1. Système de traitement de données comportant au moins deux machines virtuelles, et comprenant des premier et second systèmes d'exploitation (OS1, OS2) pour commander les machines virtuelles; un système d'exploitation superviseur (CP) pour commander les premier et second systèmes d'exploitation; et un ensemble de registres d'instruction (CR0, CR1, - - -); caractérisé par un registre d'instruction étendu (ECR) comportant un bit de commande de registre d'instruction; un moyen pour avoir accès aux registres d'instruction en réponse à une instruction d'exploitation de registre d'instruction (LCTC ou STCTC), engendrée par le premier système d'exploitation, quand le bit de commande de registre d'instruction a une première valeur; et un moyen pour engendrer une interruption dans le système d'exploitation superviseur en réponse à une instruction d'exploitation de registre d'instruction engendrée par le second système d'exploitation, quand le bit de commande de registre d'instruction a une seconde valeur différente de la première valeur.

2. Système selon la revendication 1, caractérisé en ce que le premier système d'exploitation (OS1) peut avoir accès aux registres d'instruction; et en ce que le système d'exploitation superviseur (CP) écrit la première valeur à la position de bit de commande de registre d'instruction du registre d'instruction étendu (ECR) quand le premier système d'exploitation se déroule.

3. Système selon l'une quelconque des revendications 1 et 2, caractérisé en ce que le second système d'exploitation (OS2) peut avoir accès à des registres d'instruction supplémentaires (CR6, CR7) autres que les registres d'instruction (CR0, CR1, - - -); et en ce que le système d'exploitation superviseur (CP) écrit la seconde valeur à la position de bit de commande de registre d'instruction du registre d'instruction étendu (ECR) quand le second système d'exploitation se déroule.

# Fig. 1

HARDWARE

CR0
CR1
CR2
CR3

ECR [  ] 24 [  |  ]

CR8
CR9
CR10
CR11
CR14
CR15

DIRECT ACCESS

MSU

CR6
CR7

C P

INTERRUPTION

O S 1

O S 2

1

# Fig. 2

# Fig. 3

```
┌──────────────┐
│   L C T L    │
│     o r      │
│   S T C T L  │
└──────┬───────┘
       │
       │
      ╱ ╲
     ╱   ╲
    ╱ E C R 24 ╲      YES
   ╱   = " 1 "   ╲──────────────┐
    ╲     ?     ╱               │
     ╲        ╱                 │
      ╲      ╱                  │
       │ NO                     │
       │                        ▼
┌──────┴───────┐        ┌──────────────┐
│   D I R E C T │        │              │
│   A C C E S S │        │ INTERRUPTION │
└──────────────┘        └──────────────┘
```